# EUROPEAN PATENT APPLICATION

(11) **EP 2 020 287 A1**
(43) Date of publication of application: **04.02.2009**
(21) Application number: 07113148.6
(22) Date of filing: 25.07.2007
(51) Int. Cl.: B29D 31/518, A43B 13/18, A43B 17/02

(54) **Cushioning element**

(71) Applicant: C & J CLARK INTERNATIONAL LIMITED, Street, Somerset BA16 OYA (GB)
(72) Inventor: Swain, Bernhard Michael, 72336 Balingen (DE)
(74) Representative: Marles, Alan David

(57) **Abstract**

There is provided a cushioning element (14) comprising a substrate (15) to which a resiliently deformable matrix (16) is moulded. The matrix (16) provides a plurality of formations (17) which project away from the substrate and which are interlinked at their bases where they are moulded to the substrate (15). Each formation (17) has an encircling wall (20), the outer surface of which angles inwardly in the direction away from the substrate. There is also disclosed a mould arrangement for making such a cushioning element. Said cushioning element is primarily for use in footwear and especially in a footbed or an insole (10).

## Description

The present invention relates to cushioning elements, primarily but not exclusively for use in footwear, and apparatus for marking such cushioning elements.

According to a first aspect of the present invention there is provided a cushioning element comprising a substrate and a resiliently deformable matrix moulded to the substrate, the matrix comprising a plurality of formations which project away from the substrate and which are interlinked at their bases where they are moulded to the substrate, each formation comprising an encircling wall projecting from the substrate, the outer surface of the wall angling inwardly away from the substrate.

Preferably also each formation is open remote from the substrate to expose the volume inside the encircling wall.

In preferred arrangements the encircling wall of each projection has a polygonal footprint and in one such arrangement the polygonal footprint is octagonal and the interlinking of the formations occurs at alternate edges of the octagonal footprint. Usually but not always, the polygonal footprints are substantially the same.

In some embodiments the substrate is flexible and in others the substrate is rigid.

Usually, the matrix is moulded from a natural or synthetic rubber or other elastomeric material. Conveniently the matrix is moulded from SEBS (Styrene-Ethylene-Butylene-Styrene block copolymer).

According to a second aspect of the present invention there is provided a footbed/insole for an article of footwear comprising a main body and one or more portions of the cushioning element described above.

Ideally the or each cushioning element is received in a relieved portion or thorough opening in the main body of the footbed/insole. It is a preferred feature that the or each portion of the cushioning element is secured to the main body of the footbed/insole by means of adhesive connecting a marginal portion of the substrate around the matrix to the marginal portion of the main body around the relieved portion or through opening.

With preferred arrangements the outline of the or each relieved portion or through opening corresponds to the footprint of the matrix of the associated portion of cushioning element.

Normally portions of the cushioning element are provided in the heel area and in the fore part of the footbed/insole.

According to the present invention there is also provided an article of footwear comprising an upper, a sole portion and one or more portions of the cushioning element described above or a footbed/insole as described above.

According to a further aspect of the present invention there is provided a mould arrangement having a mould plate and an associated mould cavity plate adapted to receive in use therebetween a substrate on to which a resiliently deformable matrix is to be moulded, the cavity plate providing inlet means for receiving the mould material and providing a mould cavity adjacent the substrate in the form of a matrix providing a plurality of formations which project away from the substrate and which are interlinked at their bases where they are moulded to the substrate, the mould cavity providing for each formation of the matrix an outer wall and an inner wall spaced from the outer wall.

Conveniently the inner wall is defined by a pin which is movable towards and away from the mould plate, movement towards the mould plate for facilitating separation of the moulded article and the cavity plate.

Ideally the outer walls taper inwardly in a direction away from the mould plate. In preferred arrangements each outer wall encloses a polygon in section and in one preferred embodiment each outer wall encloses an octagon in section. Usually, but not always, the shapes of the polygonal walls are substantially the same.

Embodiments of the present invention will now be described in more detail. The description refers to the following drawings in which:
Figure 1 is an exploded view of a footbed/insole for an article of footwear incorporating cushioning elements according to the present invention,
Figure 2 is a bottom view of the assembled footbed/insole of figure 1,
Figure 3 is a top view of the footbed/insole of figure 2,
Figure 4 is a section on line A-A of figure 2 in an uncompressed condition,
Figure 5 is a section on line A-A of figure 2 in a compressed condition,
Figure 6 illustrates a perspective view of a closed mould for producing the cushioning elements shown in figure 1,
Figure 7 illustrates the mould of figure 6 in an open condition,
Figure 8 is a schematic sectional view through the open mould of figure 7,
Figure 9 is a schematic sectional view through one side of part of the figure 6 mould during mould material injection,
Figure 10 is a section through a mould similar to that of figure 6 with mould material injection complete,
Figure 11 is a section similar to figure 9 but with the mould open and the cushioning element being separated from the mould,
Figure 12 is a section similar to figure 11 but with a different type of cushioning element, and
Figure 13 is a section through the mould with the cushioning elements separated.

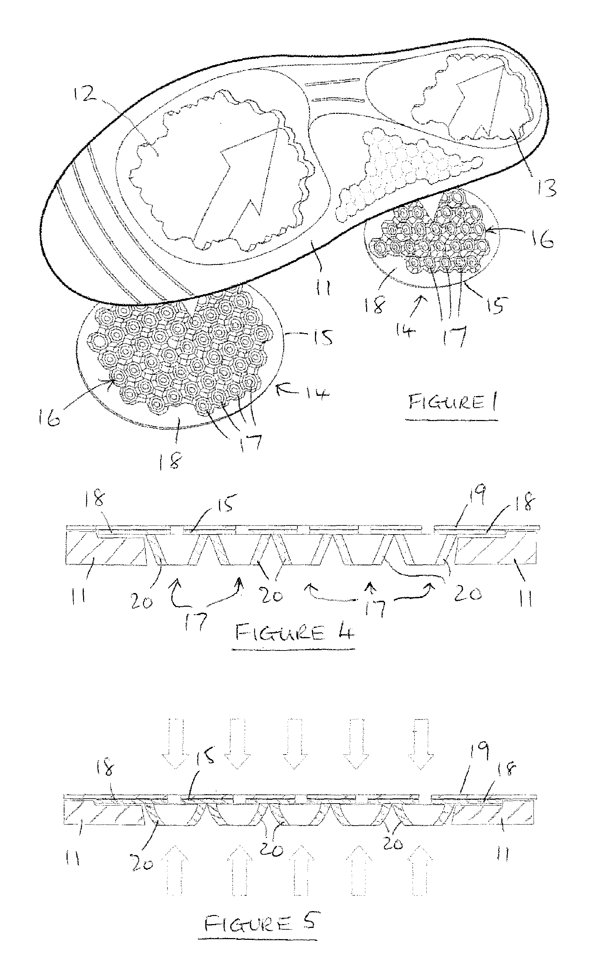

Referring firstly to figures 1 to 5 there is shown a footbed or insole 10 for an article of footwear. The main body 11 of the footbed 10 is of generally standard construction and is made from conventional footbed or insole materials but is provided with through openings 12, 13 in the heel region and in the fore region. Suitable recesses could, however, be used instead of the through openings 12, 13. In each through opening 12, 13 a cushioning element 14 is received, each cushioning element 14 comprising a substrate 15 on to which has been moulded a resiliently deformable matrix 16 of formations 17. The substrate 15 extends laterally somewhat beyond the footprint of the matrix 16 to constitute a marginal portion 18 which can be secured using adhesive to the corresponding marginal portions of the main body 11 of the footbed surrounding the openings 12, 13.

Ideally the cushioning element 14 is secured around the whole periphery of the matrix 16 but this is not strictly necessary. Similarly, the openings 12, 13 are preferably the same shape as the footprint of the associated matrix 16 so as to minimise unsupported areas in the footbed. Other methods of securing the cushioning elements 14 to the footbed 10 could also be used, such as stitching.

It is also possible that the cushioning elements 14 are not directly secured to the main body 11 of the footbed. In the illustrated embodiment, the cushioning elements are inserted into the openings 12, 13 from above and a lining material 19 is secured on top to both the main body 11 of the footbed and to the substrate 15. In such an arrangement the marginal portion may or may not be additionally secured to the main body 11 of the footbed. It will also be noted from figures 4 and 5 that in addition to the openings 12, 13, the main body 11 is recessed slightly around the openings 12, 13 for receiving the marginal portion 18 of the substrate 15.

In the embodiment shown, the substrate 15 is a flexible material such as cloth but in other embodiments the substrate 15 may be a rigid sheet such that the element 14 provides a cushioning effect without flexibility. The matrix 16 is moulded on to the substrate 15 and is formed from any suitable resiliently deformable material such as rubber or synthetic rubber. It has been found that SEBS (Styrene-Ethylene-Butylene-Styrene block copolymer) has particularly suitable properties and when moulded on to a fabric scrim made from woven or non-woven, man-made or natural material, remains securely attached thereto. Examples are cotton, nylon, polyester, Kevlar, carbon fibre.

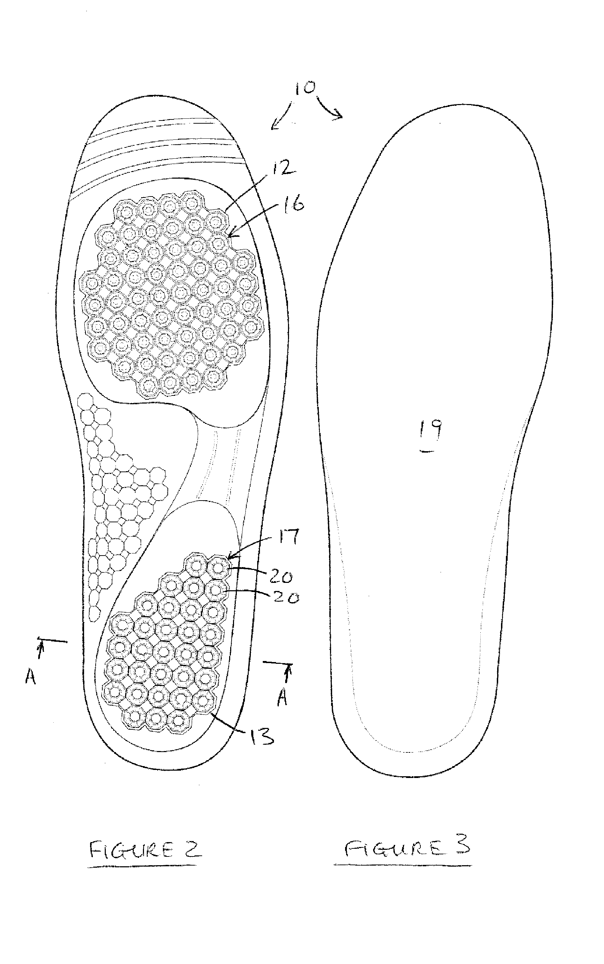

Figures 1 to 5 show that the general footprint of each formation 17 of the matrix is octagonal and that each octagonal formation 17 is interlinked with any adjacent formations 17 at their base where they are moulded on to the substrate 15 to form the matrix 16. In the case of an octagonal formation 17 it can be interlinked at four alternate edges as shown in figure 2 for example.

Each formation 17 is defined by an encircling octagonal wall 20. The wall 20 is of constant thickness and is angled inwardly in a direction away from the substrate 15. The end of each formation remote from the substrate 15 is open to define a hollow volume within each formation 17 as is clearly shown in figure 4 for example.

Figure 4 shows the cushioning element 14 in a non-compressed condition with no force being applied to either major surface. Figure 5, however, shows the cushioning element 14 in a compressed condition, for example during a walking action, and it can be seen that the encircling walls 20 of the formations 17 deform inwardly and towards the substrate 15. This gives the article of footwear a cushioning action thus aiding comfort and reducing shock to the user's foot. When the compressive force is removed, the formations return to the condition shown in figure 4. Not only will the footbed improve the comfort of the article of footwear but will reduce the possibility of damage to the foot of the user.

The illustrated footbed shows two areas of cushioning element but it will be appreciated that one or more areas of cushioning element can be provided at any chosen location or locations in the footbed. Also, although the illustrated formations 17 are octagonal, other polygons or other shapes or mixtures thereof could be combined to form the matrix 16.

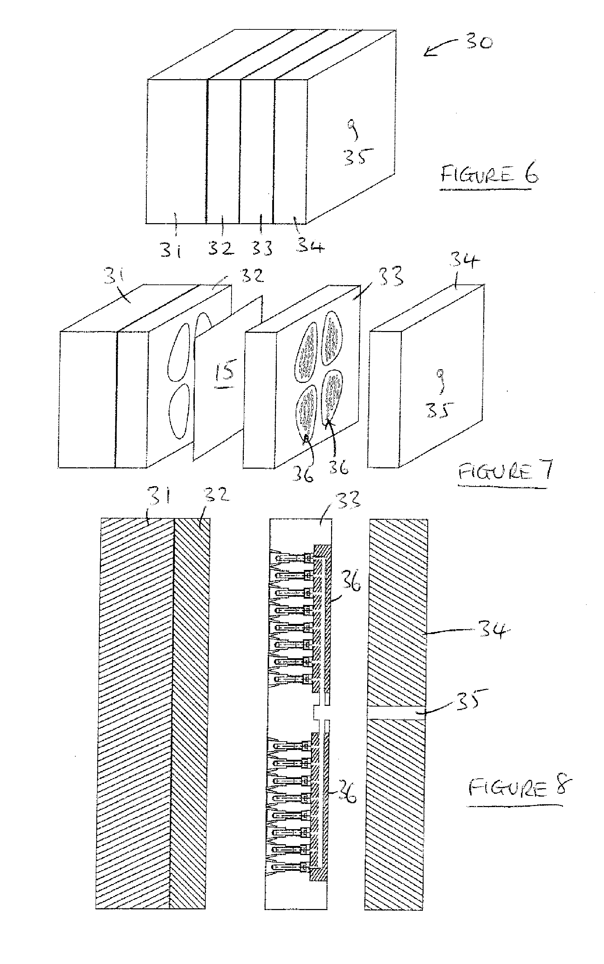

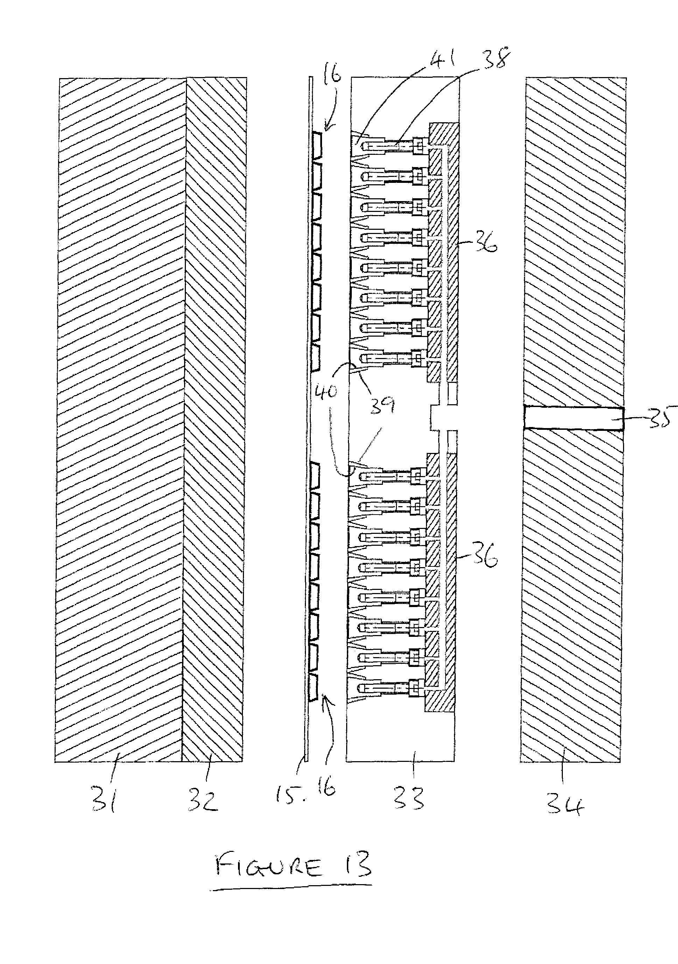

The cushioning elements 14 shown in figures 1 to 5 can be made using the mould 30 shown in figures 6 to 13. The mould 30 comprises a base member 31, a mould plate 32, a mould cavity plate 33 and a backing plate 34. The base member is in the form of a plain block and, in this embodiment, so is the mould plate 32 because it is receiving a planar substrate 17. In other arrangements the mould plate 32 could be contoured to receive a suitable contoured substrate. The backing plate 34 is a generally plain block having a main inlet 35 through which the mould material is injected.

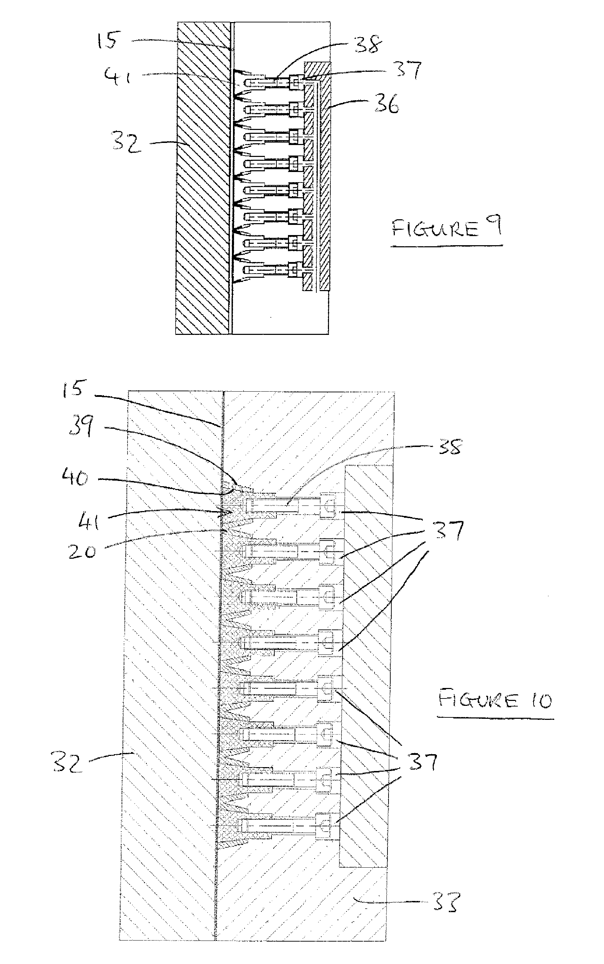

The main inlet 35 of the backing plate 34 communicates with an injection manifold 36 in the mould cavity plate 33. The manifold 36 communicates with a plurality of individual injection ports 37, one for each formation 17 of the eventual cushioning element. In each injection port 37 there is a pin 38 which is selectively slidable in a lengthwise direction (by means not shown) towards and away from the substrate. Each injection port 37 has an outer wall 39 remote from the manifold 36, the outer wall 39 being shaped to form the outer surface of the encircling octagonal wall 20 of each formation 17 of the matrix 16. Each pin 38 has an enlarged end 41 which defines an inner wall 40 which is spaced from the outer wall 39 and which is shaped to form the inner surface of the encircling octagonal wall 20 of each formation 17 and thus defines the internal shape of the hollow in each formation. The outer walls 39 for forming adjacent formations 17 actually meet just above the substrate 15 in use of the mould so that the formations are interlinked thereby forming the matrix 16, as shown more clearly in figure 10.

The moulding process is as follows. Starting from the open mould condition shown in figure 8, the substrate 15 is inserted between the mould plate 32 and the mould cavity plate 33 as shown in figure 7. The backing plate is then attached to give the fully closed mould shown in figure 6. The mould material, SEBS in this particular case, is then injected via the main inlet 35 in the backing plate 34. The mould material then flows through the injection manifold 36 in the mould cavity plate 33 and into the injection ports 37. The mould material then flows on to the substrate 15 via the spaces between the outer walls 39 and the inner walls 40 defined by the ends 41 of the pins 38. In this embodiment the end faces of the enlarged ends 41 of the pins 38 are a close fit against the substrate and therefore prevent flow of mould material on to the substrate within the encircling wall 20 of each formation.

Once the mould material has set/cured, the mould components are separated and the substrate 15 will remain with the mould cavity plate 33 by virtue of the angled encircling walls 20 being formed about the enlarged ends 41 of the pins 38.

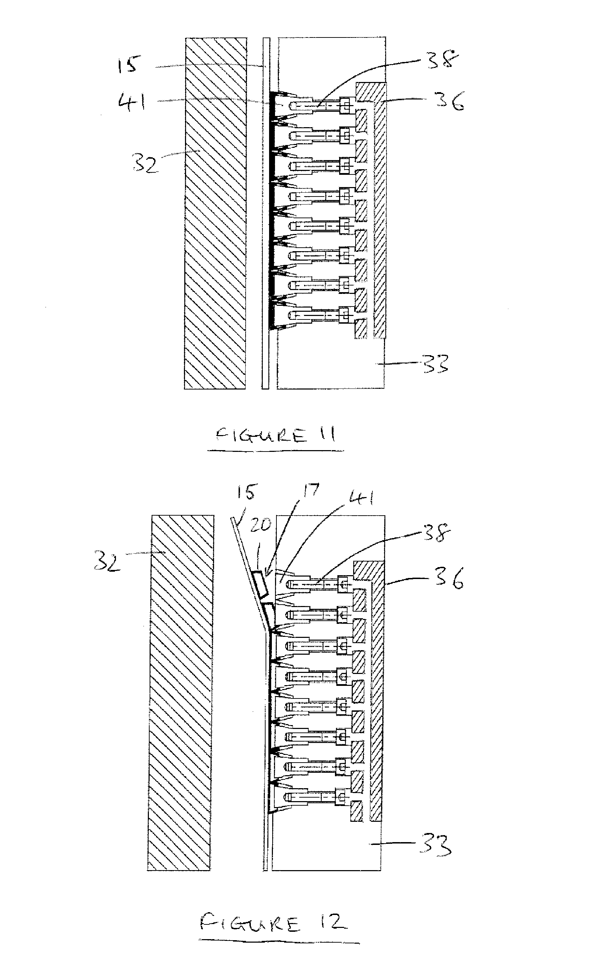

If the substrate 15 is a relatively strong flexible material then the formations 17 can be pulled off the pins 38 by gripping one side of the substrate 15 and pulling away from the mould cavity plate 33 as indicated in figure 12. If the substrate is a rigid or perhaps a weak flexible material then it may not be possible to pull the cushioning element 14 off the pins 38. It is then possible to move the pins 38 relative to the mould cavity plate 33 such that the end faces of the enlarged ends 41 of the pins push the cushioning element 14 away from the mould cavity plate 33 as shown in figure 11. This movement away from the mould cavity plate releases the encircling wall 20 of the formations 17 from the grip of the outer walls 39 thus making it easier to remove the cushioning element from the enlarged ends 41 of the pins 38.

Whilst the illustrated mould embodiment is shown for producing four cushioning elements, it will be appreciated that other numbers, shapes could be produced using similar techniques. In other arrangements the product could be moulded in plain sheets ready to be cut into shapes as desired. Also, if the enlarged ends 41 of the pins were removable and interchangeable then the internal forms of the formations could be varied. For example, a thicker encircling wall would give different cushioning characteristics.

Other variations and embodiments will be possible within the scope of the attached claims.

## Claims

1. A cushioning element comprising a substrate and a resiliently deformable matrix moulded to the substrate, the matrix comprising a plurality of formations which project away from the substrate and which are interlinked at their bases where they are moulded to the substrate, each formation comprising an encircling wall projecting from the substrate, the outer surface of the wall angling inwardly away from the substrate.

2. A cushioning element as claimed in claim 1 wherein each formation is open remote from the substrate to expose the volume inside the encircling wall.

3. A cushioning element as claimed in claim 1 or claim 2 wherein the encircling wall of each projection has a polygonal footprint.

4. A cushioning element as claimed in claim 3 wherein the polygonal footprint is octagonal and the interlinking of the formations occurs at alternate edges of the octagonal footprint.

5. A cushioning element as claimed in claim 3 or claim 4 wherein the polygonal footprints are substantially the same.

6. A cushioning element as claimed in any one of claims 1 to 5 wherein the substrate is flexible.

7. A cushioning element as claimed in any one of claims 1 to 5 wherein the substrate is rigid.

8. A cushioning element as claimed in any one of claims 1 to 7 wherein the matrix is moulded from a natural or synthetic rubber or other elastomeric material.

9. A cushioning element as claimed in claim 8 wherein the matrix is moulded from SEBS (Styrene-Ethylene-Butylene-Styrene block copolymer).

10. A footbed/insole for an article of footwear comprising a main body and one or more portions of the cushioning element as claimed in any one of claims 1 to 9.

11. A footbed/insole as claimed in claim 10 wherein the or each cushioning element is received in a relieved portion or through opening in the main body of the footbed/insole.

12. A footbed/insole as claimed in claim 11 wherein the or each portion of the cushioning element is secured to the main body of the footbed/insole by means of adhesive connecting a marginal portion of the substrate around the matrix to the marginal portion of the main body around the relieved portion or through opening.

13. A footbed/insole as claimed in claim 11 or claim 12 wherein the outline of the or each relieved portion or through opening corresponds to the footprint of the matrix of the associated portion of cushioning element.

14. A footbed/insole as claimed in any one of claims 10 to 13 wherein portions of the cushioning element are provided in the heel area and in the fore part of the footbed/insole.

15. An article of footwear comprising an upper, a sole portion and one or more portions of the cushioning element as claimed in any one of claims 1 to 9 or a footbed/insole as claimed in any one of claims 10 to 14.

16. A mould arrangement having a mould plate and an associated mould cavity plate adapted to receive in use therebetween a substrate on to which a resiliently deformable matrix is to be moulded, the cavity plate providing inlet means for receiving the mould material and providing a mould cavity adjacent the substrate in the form of a matrix providing a plurality of formations which project away from the substrate and which are interlinked at their bases where they are moulded to the substrate, the mould cavity providing for each formation of the matrix an outer wall and an inner wall spaced from the outer wall.

17. A mould arrangement as claimed in claim 16 wherein the mould cavity provides for each formation of the matrix an outer wall and an inner wall spaced from the outer wall.

18. A mould arrangement as claimed in claim 17 wherein the inner wall is defined by a pin which is movable towards and away from the mould plate, movement towards the mould plate facilitating separation of the moulded article and the cavity plate.

19. A mould arrangement as claimed in claim 17 or claim 18 wherein the outer walls taper inwardly in a direction away from the mould plate.

20. A mould arrangement as claimed in any one of claims 16 to 19 wherein each outer wall encloses a polygon in section.

21. A mould arrangement as claimed in claim 20 wherein the outer wall encloses an octagon in section.
